(19) Europäisches Patentamt / European Patent Office / Office européen des brevets

(11) **EP 4 037 171 B1**

(12) **EUROPEAN PATENT SPECIFICATION**

(45) Date of publication and mention
of the grant of the patent:
**12.02.2025 Bulletin 2025/07**

(21) Application number: **21205009.0**

(22) Date of filing: **27.10.2021**

(51) International Patent Classification (IPC):
**H02M 1/12** $^{(2006.01)}$      **H02M 5/12** $^{(2006.01)}$
**H02J 3/38** $^{(2006.01)}$

(52) Cooperative Patent Classification (CPC):
**H02M 1/126; H02M 5/12;** H02J 3/38; H02J 2300/24;
Y02E 10/56

(54) **PHOTOVOLTAIC SOLAR INVERTER WITH AN AC GRID FILTER WITHOUT INDUCTANCE**

PHOTOVOLTAISCHER SOLARWECHSELRICHTER MIT NETZFILTER OHNE INDUKTIVITÄT

ONDULEUR PHOTOVOLTAÏQUE SOLAIRE DOTÉ D'UN FILTRE DE RÉSEAU CA SANS INDUCTANCE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **27.01.2021 ES 202130063**

(43) Date of publication of application:
**03.08.2022 Bulletin 2022/31**

(73) Proprietor: **Power Electronics España, S.L.**
46160 Lliria (Valencia) (ES)

(72) Inventors:
• **SALVO LILLO, David**
46160 Lliria (Valencia) (ES)
• **SALVO LILLO, Abelardo**
16160 Lliria (Valencia) (ES)
• **JUAN AGUILAR, Josué**
46160 Lliria (Valencia) (ES)
• **CAMPS SORIANO, Jose Luis**
46160 Lliria (Valencia) (ES)
• **RODRIGO MAÑEZ, Eusebio**
46160 Lliria (Valencia) (ES)

(74) Representative: **Ungria López, Javier**
Avda. Ramón y Cajal, 78
28043 Madrid (ES)

(56) References cited:
CN-A- 101 599 353      CN-A- 105 513 762
CN-U- 202 159 565

• HAMMAMI MANEL ET AL: "Design and Simulation of a grid-connected photovoltaic system Design and simulation of a grid-connected photovoltaic system", 21 January 2015 (2015-01-21), XP055907571, Retrieved from the Internet <URL:https://www.researchgate.net/profile/Manel-Hammami-2/publication/271194959_Design_and_Simulation_of_a_grid-connected_photovoltaic_system/links/54bfd2d80cf21674ce9c89e6/Design-and-Simulation-of-a-grid-connected-photovoltaic-system.pdf> [retrieved on 20220331]
• ZHOU QINGFENG ET AL: "An active capacitor converter for improving robustness of the ZCZ-type grid-connected inverter against grid impedance variation", 2017 IEEE APPLIED POWER ELECTRONICS CONFERENCE AND EXPOSITION (APEC), IEEE, 26 March 2017 (2017-03-26), pages 3608 - 3613, XP033098774, DOI: 10.1109/APEC.2017.7931216
• MILAN PRODANOVICPRODANOVIC ET AL: "Control and Filter Design of Three-Phase Inverters for High Power Quality Grid Connection", IEEE TRANSACTIONS ON POWER ELECTRONICS, INSTITUTE OF ELECTRICAL AND ELECTRONICS ENGINEERS, USA, vol. 18, no. 1, 1 January 2003 (2003-01-01), XP011078290, ISSN: 0885-8993

**EP 4 037 171 B1**

**Description**

**FIELD OF THE INVENTION**

Photovoltaic solar inverters connected to the AC grid with transformer to AC grid included.

**TECHNICAL PROBLEM TO SOLVE**

Dimensions, weight and cost of photovoltaic solar inverters, due to the large size and weight of the associated components. To study topologies that reduce the number of components and optimise their location.

**BACKGROUND OF THE INVENTION**

The solutions available today implement a filter after each of the DC/AC converter modules, for the purpose of connecting equipment to the grid and reducing high frequency harmonics. The typical topology of these filters is LCL, since it provides greater harmonics filtering with fewer inductances and with low grid current distortion.
LCL filters are made up of coils and capacitors having large dimensions and weight.
Primary inductances are the components that occupy the most physical space and that substantially increase the weight of the module and the equipment. As a guideline, the main inductance of an LCL filter has the dimensions and weight indicated below:

| Width | 480 mm |
|---|---|
| Depth | 301 mm |
| Height | 903 mm |
| Weight | >400 kg |

Taking this information into account, the ballpark dimensions of a common 6-module solar inverter with an integrated medium voltage transformer would be as follows:

| Width | 6600 mm |
|---|---|
| Depth | 2200 mm |
| Height | 2200 mm |
| Weight | 14 Tn |

The idea, therefore, is to find a configuration which reduces the weight and the dimensions of a solar inverter.
As a document illustrating the state of the art in a general manner, the document entitled "A 60-kW 3-kW/kg Five-Level T-Type SiC PV Inverter With 99.2 % Peak Efficiency" by Yanjun et. al, published on 04 March 2018 in "2018 IEEE Applied Power Electronics Conference and Exposition (APEC), 20180304 IEEE" can be mentioned. The document by Yanjun *et al.* discloses a T-shaped photovoltaic inverter with silicon carbide SiC semiconductors having five levels instead of three to make more efficient use of this technology. To define these levels, two inverters from three levels are coupled together by means of coils. Due to the high switching frequencies in the five-level inverter, these coupling coils work as transformers under no load referred to in this document as "Inter Cell Transformers", or ICTs, which eliminate the need for the connection to the AC grid to have more additional inductances.
The document "Intercell Transformer (ICT) Design Optimization and Interphase Crosstalk Mitigation of a 100-kW SiC Filter-Less Grid-Connected PV String Inverter" (published on 8 February 2020 in "IEEE Open Journal of Power Electronics, 20200208 IEEE"), also by Yanjun *et al.,* focuses on the optimal sizing of the "Inter Cell Transformers" introduced in the preceding document.
Another prior art document is the paper titled "Design and Simulation of a grid-connected photovoltaic system Design and simulation of a grid-connected photovoltaic system", Hammami Manel ET AL, updloaded January 21, 2015, XP055907571, URL: https://www.researchgate.net/profile/Manel-Hammami-2/publication/271194959 Design_ and_Simulation_of_a_grid-connected_photovoltaic_system/links/ 54bfd2d80cf21674ce9c89e6/Design-and-Simulation-of-a-grid-connected-photovoltaic-system.pdf, (20220331). The paper presents the design of a photovoltaic conversion system conditioning with grid connection and RLC load. In order to control the quality and quantity of the injected power to the grid, the control system includes, firstly, a Maximum Power Point Tracker based on perturb and observe algorithm which tracks available power continuously.

Another prior art document is the utility model titled "Transformer for photovoltaic inverter", which was published under the publication number CN202159565U on March 7, 2012. This document discloses a transformer for a photovoltaic inverter. A pair of iron cores is arranged in the transformer and forms a reactor iron core, and the pair of the iron cores and a main iron core share one coil winding.

Another prior art document is the paper titled "An active capacitor converter for improving robustness of the ZCZ-type grid-connected inverter against grid impedance variation", 2017 IEEE APPLIED POWER ELECTRONICS CONFERENCE AND EXPOSITION (APEC), IEEE, (20170326), doi:10.1109/APEC.2017.7931216, pages 3608 - 3613, XP033098774 [A]. Using an impedance-based stability analysis method, this paper proposes an active capacitor converter (ACC) in parallel at the point of common coupling (PCC) to reshape the grid impedance, making the ratio of the reshaped grid impedance to the output impedance of GCI satisfy the Nyquist stability criterion. The ACC can guarantee the GCI to have high stability-robustness against wide-range grid impedance variation with low additional power losses and high power factor.

The aforementioned documents achieve an inverter that does not need an additional coil at the AC output to act as a filter. However, none of these documents does so by sizing the output transformer as expressed in the present invention since, in practice, what they do is to minimise the output disturbances of the inverter to the point that the inductances which already exist in the apparatus are sufficient for filtering the switching disturbances with little to no modification.

Lastly, it should be indicated that the present invention uses the concept of SCR (Short Circuit Ratio) as defined, for example, in Chapter 1 of the document with a section entitled *"Short Circuit Ratio (SCR)"* and publicly accessible at the following link: https://www.nerc.com/comm/PC_Reliability_Guidelines_DL/Item_4a._Integrating%20_Inv erter-Based_ Resources_into_Low_Short_Circuit_Strength_Systems_-_2017-11-08-FINAL.pdf

## DESCRIPTION OF THE INVENTION

To solve the problems indicated above and relating to the excess weight and volume of photovoltaic solar inverters, the present invention takes advantage of the transformer that converts the AC voltage at the outlet of the power modules to the voltage of the AC grid to which the solar inverter is connected as part of new filter topologies for the elimination of high frequency harmonics.

The invention is defined by the features of method claim 1. The dependent claims recite advantageous embodiments of the invention.

A first aspect of the invention discloses method for determining the elements of a photovoltaic solar inverter with an AC grid filter, wherein the inverter is connectable to the AC grid at a connection point. The photovoltaic solar inverter of the present invention comprises:

- at least one power module for converting a DC input voltage into a three-phase AC output voltage;
- a three-phase AC/AC transformer for adapting the three-phase AC output voltage of the power module to the three-phase AC voltage of the AC grid, wherein the AC grid has, at the connection point, an inductance "$L_2$"; wherein the three-phase AC/AC transformer comprises:

  ○ at least one winding on the low voltage side connected to the power module;
  ○ at least one winding on the grid side (medium voltage), which is a medium voltage side, connectable in series with the AC grid;
  wherein the winding on the low voltage side connected to the power module together with the winding on the grid side (medium voltage) have an equivalent inductance "$L_1$" and an equivalent impedance "$X_{CC}$"; and,

- a capacitor "C", connected to the winding of the grid side (medium voltage side) of the three-phase AC/AC transformer.

The method comprises the steps of:

- defining at least two different values of a Short Circuit Ratio "SCR" at the connection point;
- obtaining corresponding values of the inductance "$L_2$" of the AC grid at the connection point for each value of the Short Circuit Ratio "SCR" by means of the following formula:

$$L_2 = \frac{V_n^2}{2\pi f_n \cdot SCR \cdot S_n}$$

- calculating the equivalent inductance "$L_1$" of the AC/AC transformer by means of the following formula:

$$L_1 = \frac{X_{cc} \cdot V_n^2}{2\pi f_n \cdot S_n}$$

- setting a value for the resonant frequency $f_{res}$ of the $L_1CL_2$ filter and calculating, for each value of the Short Circuit Ratio "SCR", a corresponding value of the capacitor "C" by means of the following formula:

$$C = \frac{L_1 + L_2}{L_1 \cdot L_2 \cdot (2\pi f_{res})^2}$$

- selecting a value of the capacitor "C" between the minimum and maximum obtained values for the capacitor "C";

wherein:

> $X_{CC}$: is the equivalent impedance of the windings of the three-phase AC/AC transformer, configurable based on the frequency response needed for the LCL filter;
> $S_n$: is the nominal power of the transformer;
> $V_n$: is the nominal voltage of the transformer on the low side (power module side, usually between 600 and 660V);
> $f_n$: is the working frequency (usually 50 or 60Hz);
> $f_{res}$: is the resonant frequency of the $L_1CL_2$ filter.

In one embodiment of the invention, the solar inverter may further comprise "n" power modules connected to respective independent windings (multi-windings) on the low voltage side of the three-phase AC/AC transformer. In this case, the method comprises a step of defining a proportion "x" of the transformer impedance on the grid side with respect to the equivalent impedance "Xcc" of the windings of the transformer; and, the step of calculating the equivalent inductance "$L_1$" of the AC/AC transformer is calculated by means of the following formula:

$$L_1 = (x + \frac{(1-x)n}{N}) \frac{X_{cc} \cdot V_n^2}{2\pi f_n \cdot S_n}$$

wherein "N" is the number of windings of the low working side and "n" is the total number of windings of the low voltage side. The number of windings of the low working side "N" being the number of windings connected to the power modules to be operated among the total number of power modules "n". If, for example, Xcc is divided by 50 %, "x" is single and equals to 0.5.

The inverter of the present invention can comprise a single DC power BUS for powering the "n" power modules, wherein the single DC BUS is connectable to at least one DC power source. Thus, the method may further comprise powering the "n" power modules with the single DC power BUS and connecting the single DC BUS to the at least one DC power source. Alternatively, the inverter of the present invention can comprise one DC power BUS for each of the "n" power modules, such that each of the "n" power modules is connectable to respective DC power sources. Thus, the method may further comprise powering each of the "n" power modules with respective DC power BUSES and connecting each of the "n" power modules to respective DC power sources.

A second aspect not covered by the invention discloses a method for determining the elements of a photovoltaic solar inverter with an AC grid LLCL filter, wherein the inverter is connectable to the AC grid at a connection point. The solar inverter comprises:

- at least one power module for converting a DC input voltage into a three-phase AC output voltage;
- a three-phase AC/AC transformer for adapting the three-phase AC output voltage of the power module to the three-phase AC voltage of the AC grid, wherein the AC grid has, at the connection point, an inductance "$L_p$"; wherein the three-phase AC/AC transformer comprises:

> ◦ at least one winding on the low voltage side connected to the power module and with an equivalent inductance "$L_1$";
> ◦ at least one winding on the low voltage side connected to a capacitor "C", and with an inductance "$L_c$";
> ◦ at least one winding on the grid side (medium voltage), which is a medium voltage side, connectable in series with the AC grid, wherein the winding on the grid side has an equivalent inductance "$L_m$" and an equivalent

impedance "$X_{CC}$"; and,

- the capacitor "C".

The equivalent inductance "$L_1$" (L-) of the AC/AC transformer (10''''), the inductance "$L_c$" (-L-); the capacitor "C" (-C-) and an inductance "$L_2$" (-L) resulting from adding the inductance "$L_p$" and the equivalent inductance "$L_M$", form a high frequency filter with "LLCL" typology, such that the values of the equivalent inductance "$L_1$" and of the capacitor "C" are calculated based on the frequency response of the "LLCL" filter according to the following steps of the method, which comprises:

- defining at least two different values of a Short Circuit Ratio "SCR" at the connection point;
- obtaining corresponding values of the inductance "$L_2$" of the AC grid at the connection point for each value of the Short Circuit Ratio "SCR" by means of the following formula:

$$L_2 = L_m + L_p,$$

wherein:

$$L_m = (x) \frac{X_{cc} \cdot V_n^2}{2\pi f_n \cdot S_n};$$

$L_P$ is the inductance of the AC grid, at the connection point, which varies according to the Short Circuit Ratio "SCR" at the connection point according to the following expression:

$$L_P = \frac{V_n^2}{2\pi f_n \cdot SCR \cdot S_n}$$

- calculating the equivalent inductance "$L_1$" of the three-phase AC/AC transformer by means of the following formula:

$$L_1 = (1 - x) \frac{X_{cc} \cdot V_n^2}{2\pi f_n \cdot S_n}$$

- setting a value for the resonant frequency fres of the $L_1 L_m C L_p$ filter and calculating, for each value of the Short Circuit Ratio "SCR", a corresponding value of the capacitor "C" by means of the following formula:

$$C = \frac{L_1 + L_2}{(L_1 L_2 + L_c(L_1 + L_2)) \cdot (2\pi f_{res})^2}$$

wherein

$$L_c = \frac{1}{C \cdot (2\pi f_{res})^2}$$

- selecting a value of the capacitor "C" between the minimum and maximum obtained values for the capacitor "C";

wherein:

$X_{CC}$ is the configurable element based on the frequency response needed for the $L_1 L_m C L_p$ filter;
x: proportion of impedance of the medium side (single; if, for example, Xcc is divided by 50 %, x=0.5);
$S_n$ is the nominal power of the transformer;
$V_n$ is the nominal voltage of the transformer on the low side (power module side);
$f_n$ is the working frequency of the low side (usually 50 or 60Hz);
$f_{res}$ is the resonant frequency of the $L_1 L_m C L_p$ filter.

In one embodiment of the second aspect not covered by the present invention, the solar inverter may further comprise "n" power modules connected to respective independent windings (multi-windings) on the low voltage side of the three-phase AC/AC transformer. In this case, the method comprises a step of defining a proportion "x" of the transformer impedance on the grid side with respect to the equivalent impedance "Xcc" of the windings of the transformer; and, the step of calculating the equivalent inductance "$L_1$" of the three-phase AC/AC transformer is calculated by means of the following formula:

$$L_1 = (\frac{(1-x)\cdot n}{N})\frac{X_{cc}\cdot V_n^2}{2\pi f_n \cdot S_n}$$

wherein "N" is the number of windings of the low working side and "n" is the total number of windings of the low voltage side. The number of windings of the low working side "N" being the number of windings connected to the power modules to be operated among the total number of power modules "n". If, for example, Xcc is divided by 50 %, "x" is single and equals to 0.5.

For the second aspect not covered by the present invention, the inverter of this disclosure can comprise a single DC power BUS for powering the "n" power modules, wherein the single DC BUS is connectable to at least one DC power source. Thus, the method may further comprise powering the "n" power modules with the single DC power BUS and connecting the single DC BUS to the at least one DC power source. Alternatively, the inverter of this disclosure can comprise one DC power BUS for each of the "n" power modules, such that each of the "n" power modules is connectable to respective DC power sources. Thus, the method may further comprise powering each of the "n" power modules with respective DC power BUSES and connecting each of the "n" power modules to respective DC power sources.

In conclusion, the advantages of the photovoltaic solar inverter of the present invention are listed below:

- Use of a transformer as a filter. The impedance of the transformer is used as a main coil of the filter:

    o Elimination of coils → Reduction of weight and cost;

- Use of a transformer with multiple secondary windings between power modules:

    ◦ Common mode choke between power modules;
    ◦ Use of interlinked switches;

- Use of interlinked switches:

    o Increase in the frequency of interest for filter design.

- Increase in the frequency of interest of the filter:

    ◦ Reduction of the capacitive nature of the filter used;
    ◦ Greater filter design range (the resonance has a higher frequency range in which it does not generate problems);

- Greater filter design range:

    o Possibility of using the grid impedance as the secondary impedance of the filter.

**BRIEF DESCRIPTION OF THE FIGURES**

Figure 1 shows a photovoltaic solar inverter of the state of the art.

Figure 2 shows the first embodiment (topology 1) of the photovoltaic solar inverter according to the present invention.

Figure 3 shows an equivalent filter for the inverter shown in Figure 2.

Figure 4 shows the Bode plot of the resulting filter for the inverter of the present invention shown in Figure 2 for different AC connection grids having different SCR values.

EP 4 037 171 B1

Figure 5 shows the second embodiment (topology 2) of the photovoltaic solar inverter according to the present invention, with a multi-winding transformer and common DC BUS for supplying power to the power modules.

Figure 6 shows the third embodiment (topology 3) of the photovoltaic solar inverter according to the present invention, with a multi-winding transformer and independent supply for the power modules.

Figure 7 shows an equivalent filter for any of the inverters shown in Figures 5 and 6 with three working power modules.

Figure 8 shows a Bode plot for the filter shown in Figure 7.

Figure 9 shows the current in the capacitor of the LCL filter for any of the inverters shown in Figures 5 and 6, with three working power modules.

Figure 10 shows an equivalent filter for any of the inverters shown in Figure 5 and 6 with two working power modules.

Figure 11 shows a Bode plot for the filter shown in Figure 10.

Figure 12 shows the current in the capacitor of the LCL filter for any of the inverters shown in Figures 5 and 6, with two working power modules.

Figure 13 shows a Bode plot for the filter shown in Figure 12, with a single working power module.

Figure 14 shows the current in the capacitor of the LCL filter for any of the inverters shown in Figures 5 and 6, with one working power module.

Figure 15 shows a further example (topology 4) of a photovoltaic solar inverter not covered by the present invention, with a multi-winding transformer, a winding dedicated to the capacitor, forming an LLCL filter.

Figure 16 shows an equivalent filter for the inverter shown in Figure 15.

**DESCRIPTION OF VARIOUS EXEMPLARY EMBODIMENTS OF THE INVENTION**

Reference list.

1.- photovoltaic solar inverter of the state of the art;
2.- photovoltaic solar inverter of the state of the art;
3.- LCL filter of the state of the art;
4.- power stage of the state of the art;
5.- low to medium voltage transformer of the state of the art;
6.- medium voltage AC grid (36 KV);
6a.- inductance of the AC grid;
7.- DC voltage source (photovoltaic plant, batteries, etc.);
8.- photovoltaic solar inverter of the present invention.

    8'.- photovoltaic solar inverter of the present invention - Topology 1.
    8".- photovoltaic solar inverter of the present invention - Topology 2.
    8'''.- photovoltaic solar inverter of the present invention - Topology 3.
    8''''.- photovoltaic solar inverter not covered by the present invention - Topology 4.

9.- power module of the present invention;
10'.- low to medium voltage transformer of the present invention - Topology 1;
10".- low to medium voltage transformer of the present invention - Topology 2;
10'''.- low to medium voltage transformer of the present invention - Topology 3;
10''''.- low to medium voltage transformer not covered by the present invention - Topology 4;

    10a, 10b: primary winding (inductance) and secondary winding (inductance) of the transformer, respectively;

10c: winding (inductance) of the low to medium voltage transformer specific for the capacitor;

11.- capacitor (capacitor bank with one capacitor per phase - three-phase);
12.- DC BUS.

The present invention takes advantage the transformer (low to medium voltage, for example) which converts the AC voltage at the outlet of the power modules (usually low voltage around 600V) into the AC grid voltage (usually medium voltage: 36KV) to which the solar inverter is connected as part of new filter topologies for eliminating high frequency harmonics.

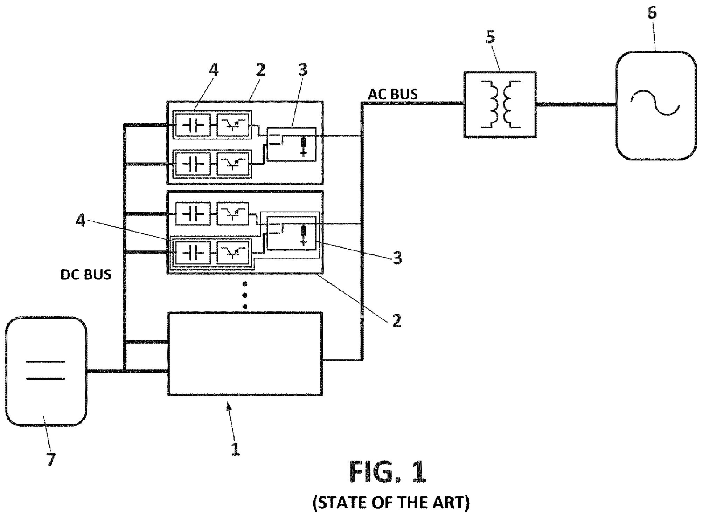

Figure 1 shows an inverter 1 of the state of the art, wherein there are several power modules 2, each of which includes the power stage 4 and the LCL filter 3, the outlets of power modules 2 are connected to a common AC BUS, which is connected to the inlet of the low to medium voltage transformer 5. Therefore, the present invention eliminates the filter 3 as such from the power module and adds a new specific transformer which replaces the transformer 5 so that not only does it comply with the low to medium voltage transformation ratio, but it furthermore has a frequency behaviour equivalent to the "first L-" of the "LCL" filter. The capacitor "-C-" is added at the outlet of the new specific transformer and is also set/configured based on the response needed for the "LCL" filter. Lastly, the AC grid acts as the last "-L", which depends on the SCR (Short Circuit Ratio) so its values are limited within a range. Advantage is thereby taken of two existing elements such as the low to medium voltage transformer and the AC grid as first and third elements (inductances) of the LCL filter, and the capacitor is only added to form the filter as a second intermediate element. This invention has the advantage that it eliminates the very heavy coils to form the inductances of the LCL filter 3 included in the power modules 2 of the inverters of the state of the art.

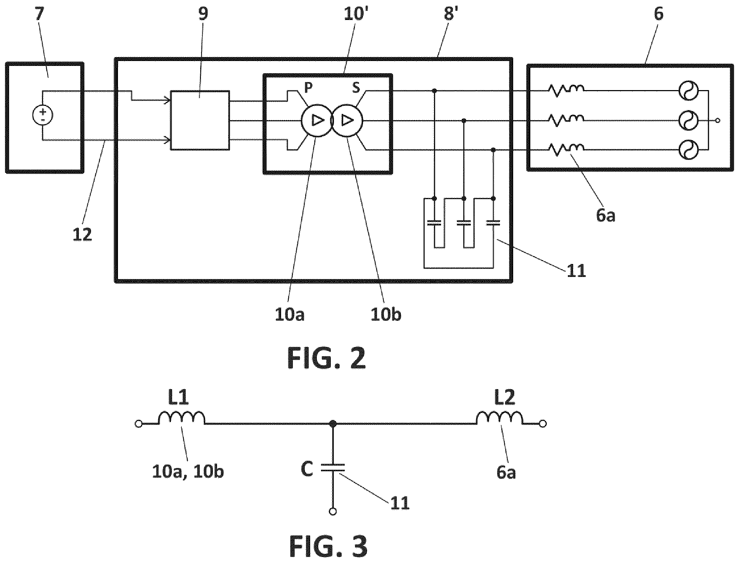

The first embodiment of the photovoltaic solar inverter 8' (topology 1) is shown in Figure 2. In this first embodiment, the topology of the "LCL" filter of the state of the art is replaced with a "transformer + capacitor" topology. This topology involves the elimination of three-phase secondary inductances (i.e., inductances of the block with reference 3 in Figure 1 and additionally the capacitor in the same block). The photovoltaic solar inverter **8'** shown in Figure 2 is a "simple" inverter with a single power module **9** (without inductance or a capacitor with which to form the LCL filter of the power module of the state of the art), wherein the transformer **10'** and the capacitor **11** are located on the side of the AC grid **6**. The "LCL" filter is completed with the inductance "$L_2$" **6a** that the AC grid has at the connection point. That is, the L-C-L filter is formed by the primary-secondary inductances **10a-10b** of the specific transformer **10'** (L-), the also specific capacitor **11** (-C-) and the inductance **6a** which is variable but limited (within a range dependent on the SCR) of the AC grid (-L) **6**. The primary-secondary inductances **10a-10b** of the specific transformer **10'** have an equivalent inductance $L_1$. The impedance of the transformer $Z_{CC}$ is related to resistance $R_{CC}$ and reactance $X_{CC}$ by means of the expression $Z_{CC} = R_{CC} + jX_{CC}$ and in turn reactance $X_{CC}$ is related to inductance $L_1$: $X_{CC} = 2\pi L_1$. Reactance $X_{CC}$ is a parameter which has a certain margin of freedom in the design of the transformer. Therefore, by modifying the reactance $X_{CC}$, the inductance $L_1$ and with it the selection and response of the filter, are also modified. That is, the response of the filter is configured by selecting suitable values of "C" and "$X_{CC}$".

The transfer function of the filter for the inverter shown in Figure 2, which has a filter equivalent to the one shown in Figure 3, is developed below. Namely, Figure 3 shows the inductance "$L_1$" equivalent to the primary inductance **10a** and secondary inductance **10b** of the transformer **10'**, and the capacitor "C" **11** and the equivalent grid inductance "$L_2$" **6a** is also shown. The transfer function is:

$$\frac{I}{V} = \frac{1}{s^3 \cdot CL_1 L_2 + s \cdot (L_1 + L_2)}$$

The equivalent inductance $L_1$ is determined by the transformer.
Data of the transformer:

- $V_{f\text{-}f\_n}$ = 660V (low side)
- $S_n$ = 1.209 MVA
- $X_{cc}$ = 8 %
- $f_n$ = 50Hz

Therefore:

$$L_1 = \frac{X_{cc} \cdot V_n^2}{2\pi f_n \cdot S_n} = 76\mu H$$

The inductance $L_2$ is determined by the grid. For a defined SCR [2;5;10;30], the following is obtained:

$$L_2 = \frac{V_n^2}{2\pi f_n \cdot SCR \cdot S_n} = [478; 191; 96; 32]\mu H$$

The capacitor "C" is designed to obtain the desired attenuation at the switching frequency of the inverter (3kHz is considered). The resonant frequency thereof is decided for that purpose. By setting it at 1200Hz, the following is true:

$$C = \frac{L_1 + L_2}{L_1 \cdot L_2 \cdot (2\pi f_{res})^2} = [267; 322; 414; 782]\mu F$$

Once the foregoing has been calculated, a single capacitor that works for the entire design range can be designed. For example, by choosing C=350μF:

$$f_{res} = \left.\sqrt{\frac{L_1 + L_2}{L_1 \cdot L_2 \cdot C}}\middle/ 2\pi\right. = [1048; 1151; 1306; 1794]Hz$$

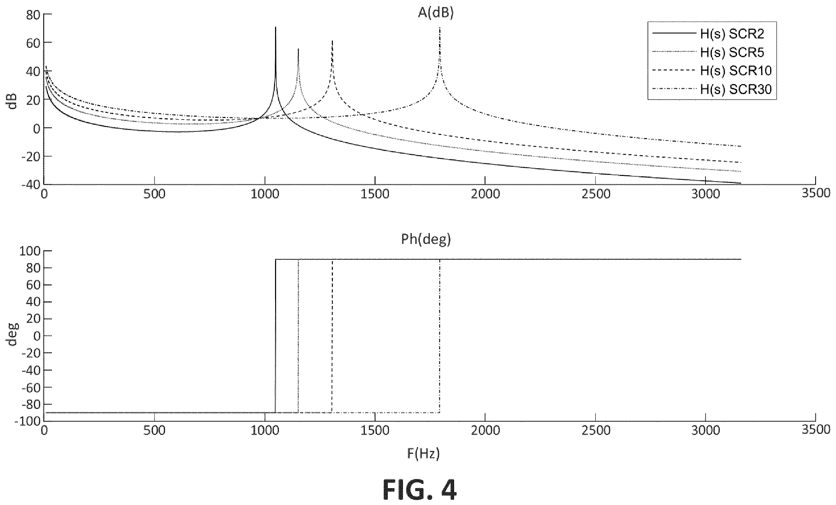

With the previous calculations, the Bode plot (see Figure 4) of the resulting filter for the inverter of the present invention for the SCR values indicated above is obtained.

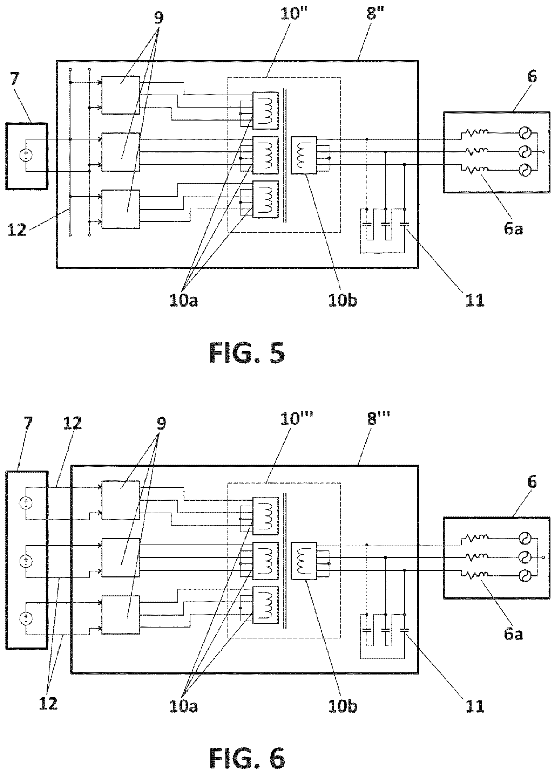

The second embodiment of the inverter **8"** (topology 2) of the present invention is shown in Figure 5. The inverter **8"** shown in Figure 5 is a modular inverter without inductances or a capacitor with which to form the LCL filter of the power module of the state of the art. The inverter **8"** has transformer 10" with multi-winding **10a,** plus the capacitor **11** on the grid side. On the DC side **7,** the three power modules **9** are connected to respective independent input windings **10a** of the transformer **10",** with the three power modules **9** being powered with DC BUS **12** common for all of them coming from the DC source **7,** such as a photovoltaic solar power plant. The functions and advantages of the inverter **8"** are:

- Raising/setting AC voltage between inverter and AC grid;
- Differential inductance for AC current filtering (together with the capacitor on the grid side)
- Common mode choke: this allows several power modules to work with a common DC BUS without common mode current recirculation. Interlinked operation of power modules.

The third embodiment **8‴** (topology 3) of the inverter of the present invention is shown in Figure 6. The inverter **8‴** shown in Figure 6 in a manner similar to that shown in Figure 5, is an inverter modular without inductances or a capacitor with which to form the LCL filter of the power module of the state of the art. The inverter **8‴** has transformer **10‴** with multi-winding **10a,** plus the capacitor **11** on the grid side AC **6.** The only difference with respect to the inverter shown in Figure 5 is that it has independent DC buses. That is, on the direct current DC side, each of the three power modules **9** has an independent power supply **7** which, for example, can be different photovoltaic solar fields or a hybrid configuration with inputs for a photovoltaic solar field and batteries. The functions and advantages of the inverter **8‴** are the same as those of the inverter **8"** shown in Figure 5.

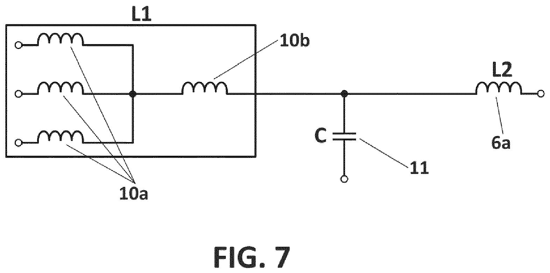

An equivalent filter model for the photovoltaic solar inverters **8"** and **8‴** of the present invention shown in Figures 5 and 6, respectively, are detailed below. In Figure 7, the transformer **10"** or **10‴** is observed, represented as one inductance $L_1$ for each of the windings to which respective power modules **9** are connected. The equivalent model of the transformer **10"** or **10‴** for the different cases of use (one to three working power modules **9**) can thereby be analysed. Figure 7 also shows the capacitor "C" **11** and the grid inductance "$L_2$" **6a.**

When working with this model, it will be necessary to define $X_{CC}$ of the primary ($X_{cc}^{pri}$) and of the secondary ($X_{cc}^{sec}$). As a first approach, it can be assumed that *Xcc* is divided equally between the primary and secondary ($X_{cc}^{pri} = X_{cc}^{sec} = 0.5 \cdot X_{cc}$).

The generic equation based on the number of power module to calculate $L_1$ is the following:

$$L_1 = (x + \frac{(1-x) \cdot n}{N}) \frac{X_{cc} \cdot V_n^2}{2\pi f_n \cdot S_n}$$

wherein "x" is the proportion of impedance of the medium side (single), "N" is the number of windings of the low working side and "n" is the total number of windings of the low side.

Mentioned again is the expression for the inductance of the AC grid "$L_2$", which varies according to the SCR (Short Circuit Ratio), according to the following expression:

$$L_2 = \frac{V_n^2}{2\pi f_n \cdot SCR \cdot S_n}.$$

• *THREE working power modules.*

The case of three working power modules when the inverter has three power modules is analysed below. Taking the foregoing into account, the impedance of each secondary winding is three-fold (number of windings "n"=3); said value (

$$X_{cc}^{sec\_dev} = 1.5 \cdot X_{cc}$$

). The following can thereby be defined:

$$X_{cc}^{3/3} = X_{cc}^{pri} + X_{cc}^{sec\_dev}/3 = 0.5 \cdot X_{cc} + 0.5 \cdot X_{cc} = X_{cc}$$

$$X_{cc}^{2/3} = X_{cc}^{pri} + X_{cc}^{sec\_dev}/2 = 0.5 \cdot X_{cc} + 0.75 \cdot X_{cc} = 1.25 \cdot X_{cc}$$

$$X_{cc}^{1/3} = X_{cc}^{pri} + X_{cc}^{sec\_dev} = 0.5 \cdot X_{cc} + 1.5 \cdot X_{cc} = 2 \cdot X_{cc}$$

When working with three power modules **9,** the operation is similar to the case of the inverter **8'** of the first embodiment of the invention shown in Figure 2, the equivalent filter of which can be carried out in a manner similar to that described for Figure 3. The main difference with the inverter shown in Figure 2 is that the power modules **9** work interlinked, with the switching frequency to be attenuated by the filter being three times higher than the switching frequency of the power modules (3kHz in the power modules and 9kHz is the frequency of interest for the filter).

The equivalent per power module for filter design can be calculated taking into account that N=n=3, x=0.5 and SCR [2, 5, 10, 30]:

$$L_1 = \left(x + \frac{(1-x) \cdot n}{N}\right) \frac{X_{cc} \cdot V_n^2}{2\pi f_n \cdot S_n} = \left(0.5 + \frac{1.5}{3}\right) \frac{X_{cc} \cdot V_n^2}{2\pi f_n \cdot S_n} = \frac{X_{cc} \cdot V_n^2}{2\pi f_n \cdot S_n} = 76\mu H$$

$$L_2 = \frac{V_n^2}{2\pi f_n \cdot SCR \cdot S_n} = [478; 191; 96; 32]\mu H$$

In this case $L_1$ and $L_2$ have the same value as in the previous case, and the main difference is that the capacitor will be designed to resonate the filter at 3600Hz for the different SCR values [2, 5, 10, 30], whereby:

$$C = \frac{L_1 + L_2}{L_1 \cdot L_2 \cdot (2\pi f_{res})^2} = [30; 36; 46; 87]\mu F$$

Once the foregoing has been calculated, a single capacitor that works for the entire design range can be designed. For example, by choosing C=70μF:

$$f_{res} = \sqrt{\frac{L_1 + L_2}{L_1 \cdot L_2 \cdot C}}/2\pi = [2344, 2575, 2919, 4012]Hz$$

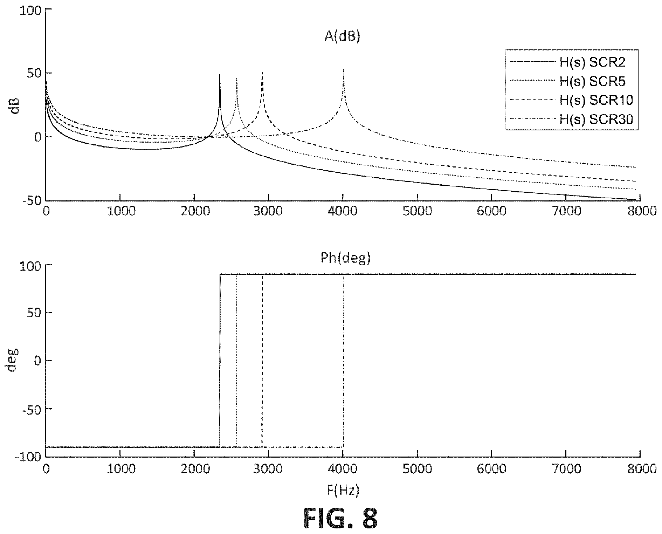

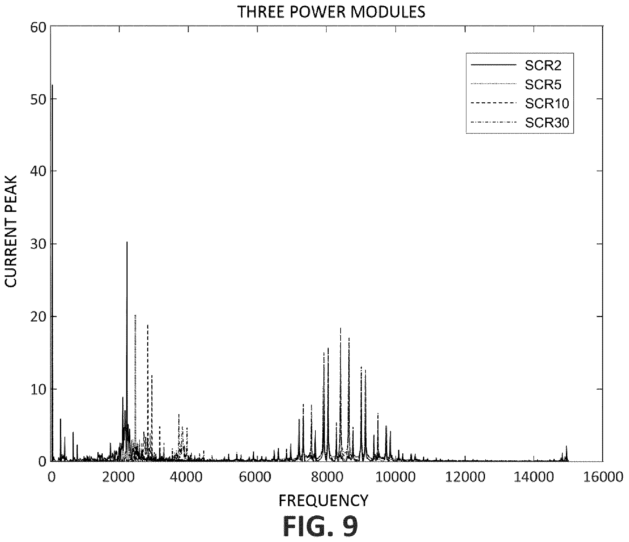

With the previous calculations, the Bode plot (see Figure 8) of the resulting filter for the inverter of the present invention according to the second embodiment **8"** and third embodiment **8‴** of the invention for SCR values [2, 5, 10, 30] and with three working power modules, is obtained. Figure 9 shows the current in the capacitor "C" **11** of the LCL filter for said inverter **8"** or **8‴** and the same SCR values.

• *TWO working power modules*

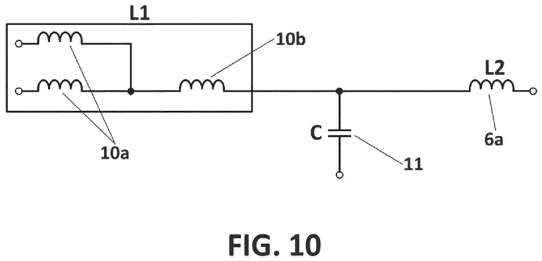

The case of two working power modules when the inverter has three power modules in total is analysed below. With the previous considerations, the model of the photovoltaic solar inverter of the second embodiment **8"** and third **8‴** embodiment (Figure 5 and Figure 6, respectively) can be determined working with two of the three power modules and their main equivalent inductance $L_1$. The filter equivalent working with two power modules **9** is shown in Figure 10, wherein the main inductance $L_1$ equivalent to inductances **10a** and **10b** is shown. Figure 10 also shows the capacitor **11** and the equivalent grid inductance **6a** $L_2$ of the AC grid. The equivalent inductance $L_1$ is calculated as follows:

$$L_1 = \left( x + \frac{(1-x)\cdot n}{N} \right) \frac{X_{cc}\cdot V_n^2}{2\pi f_n \cdot S_n} = \left( 0.5 + \frac{(1-0.5)\cdot 3}{2} \right) \frac{X_{cc}\cdot V_n^2}{2\pi f_n \cdot S_n} = 1.25 \cdot \frac{X_{cc}\cdot V_n^2}{2\pi f_n \cdot S_n} = 95\mu H$$

With the value of the capacitor "C" defined for the operation with three power modules, C= 70μF, a resonant frequency is obtained:

$$f_{res} = \left. \sqrt{\frac{L_1 + L_2}{L_1 \cdot L_2 \cdot C}} \middle/ 2\pi \right. = [2132, 2384, 2752, 3892] Hz$$

As can be observed, the filter with two power modules is very similar to the filter with three power modules. The main difference is that the frequency of interest for the filter will only be 6kHz, according to the circumstance of 3kHz switching in the power modules **4**.

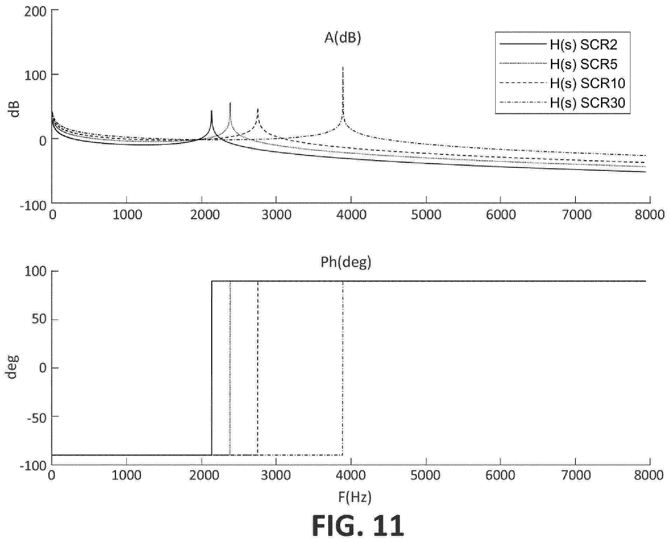

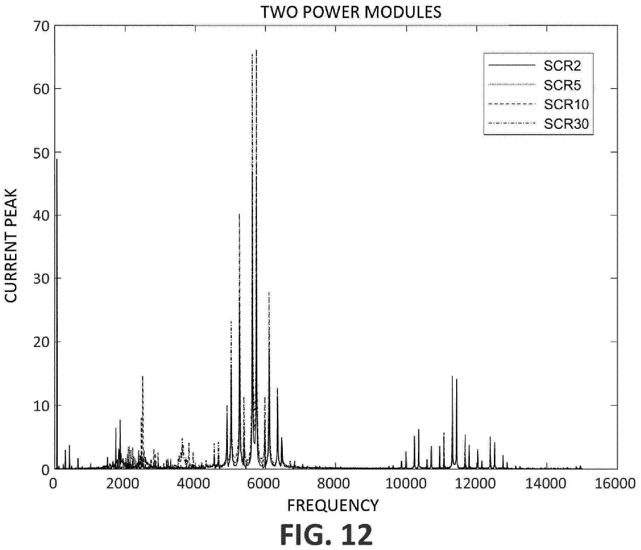

With the previous calculations, the Bode plot (see Figure 11) of the resulting filter for the inverter of the present invention according to the second embodiment **8"** and third embodiment **8‴** of the invention (topologies 2 and 3) for SCR values [2, 5, 10, 30] and with two working power modules, is obtained. Figure 12 shows the current in the capacitor 11 of the LCL filter ($L_1CL_2$) for said embodiments of the inverter and the same SCR values.

• *ONE working power module*

The case of one working power module when the inverter has three power modules is analysed below. Lastly, with a power module **9** and the same circumstances as in the previous cases for two and three power modules:

$$L_1 = 2 \cdot \frac{X_{cc}\cdot V_n^2}{2\pi f_n \cdot S_n} = 153\mu H$$

With the same value of the capacitor defined for the operation of two and three modules of 70μF, resonant frequencies for different SCR values [2, 5, 10, 30] are obtained:

$$f_{res} = \left. \sqrt{\frac{L_1 + L_2}{L_1 \cdot L_2 \cdot C}} \middle/ 2\pi \right. = [1768, 2064, 2481, 3705] Hz$$

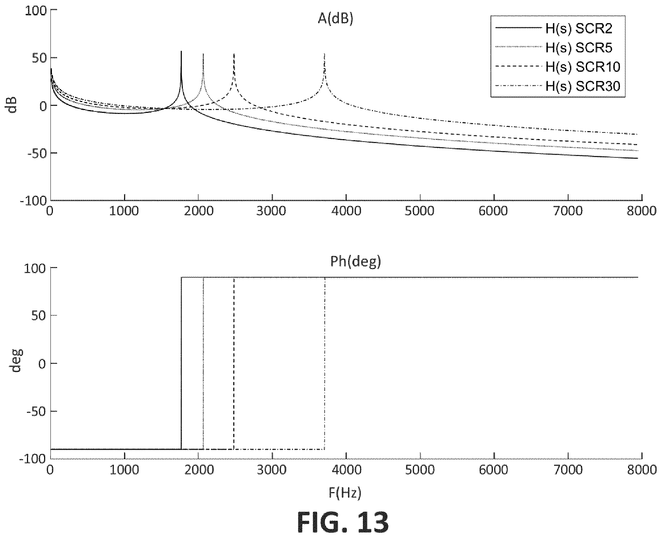

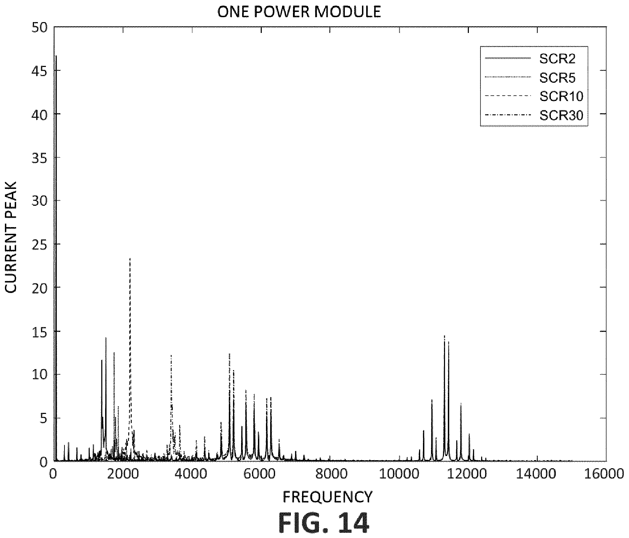

With the previous calculations, the Bode plot (see Figure 13) of the resulting filter for the inverter of the present invention according to the second embodiment **8"** and third embodiment **8‴** of the invention (topologies 2 and 3) for SCR values [2, 5, 10, 30] and with one working power module, is obtained. Figure 14 shows the current in the capacitor of the LCL filter for said embodiments of the inverter and the same SCR values. However, given the resonances of the filter, for one power module it is mandatory to increase the switching frequency. In this example, up to 6kHz.

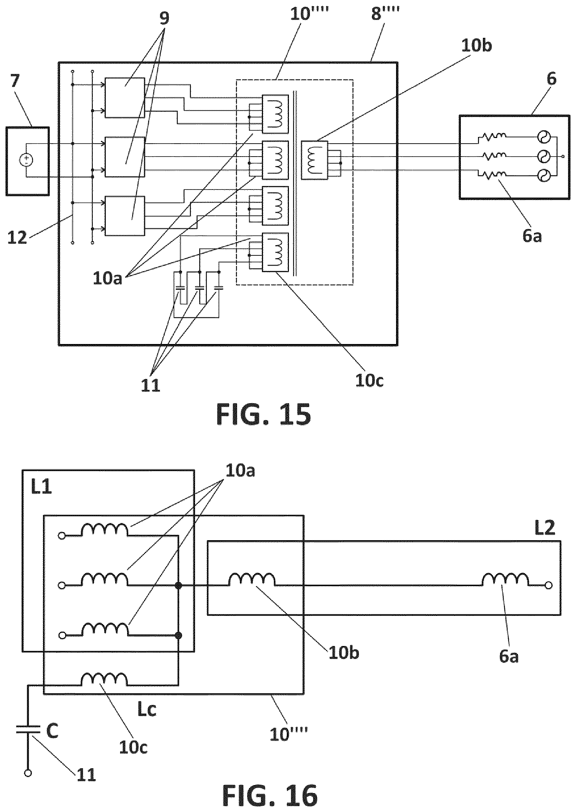

A fourth **8‴‴** example of the photovoltaic solar inverter not covered by the present invention is shown in Figure 15 (Topology 4). In this case of the fourth example **8‴‴** the resulting filter is LLCL. The equivalent filter is shown in Figure 16, wherein the filter is made up of $L_1 L_C C L_2$. Inductance $L_1$ is the inductance equivalent to the three inductances 10a of the primary of the transformer **10‴‴**. Inductance $L_2$ is the inductance equivalent to the inductance **10b** of the secondary of the

transformer **10''''** and of the inductance **6a** of the AC grid **6.** The primary of the transformer has an additional inductance **10c** which will be inductance "$L_C$", dedicated to the capacitor **11,** such that the capacitor **11** is connected between the inductance **10c** and ground. The design of the capacitor bank **11** would be dual, being adapted to the slot at the frequency of 6 and 9 kHz (two or three times the switching frequency).

The transfer function of the $L_1L_CCL_2$ filter is:

$$\frac{I}{V} = \frac{s^2 \cdot CL_c + 1}{C \cdot \left(L_1 L_2 + L_c \left(L_1 L_2\right)\right) \cdot s^3 + s \cdot \left(L_1 + L_2\right)}$$

And the values of $L_1L_CCL_2$ are calculated as follows:

$$L_1 = \left(\frac{(1-x) \cdot n}{N}\right) \frac{X_{cc} \cdot V_n^2}{2\pi f_n \cdot S_n} \; ; \; C = \frac{L_1 + L_2}{(L_1 L_2 + L_c(L_1 + L_2)) \cdot (2\pi f_{res})^2} \; ;$$

$$L_c = \frac{1}{C \cdot (2\pi f_{res})^2}$$

wherein:

"N" is the number of windings of the low working side and "n" is the total number of windings of the low voltage side;
$X_{CC}$ is the configurable element based on the frequency response needed for the LLCL filter;
x: proportion of impedance of the medium side (single; if, for example, Xcc is divided by 50 %, x=0.5),
$S_n$ is the nominal power of the transformer;
$V_n$ is the nominal voltage of the transformer on the low side (power module side);
$f_n$ is the working frequency of the low side (usually 50 or 60Hz);
$f_{res}$ is the resonant frequency of the LLCL filter;

and knowing that:

$L_2 = L_M + L_P$, wherein:

$$L_m = (x) \frac{X_{cc} \cdot V_n^2}{2\pi f_n \cdot S_n}$$

$L_P$ is the inductance of the AC grid which varies according to the SCR (Short Circuit Ratio) according to the following expression:

$$L_p = \frac{V_n^2}{2\pi f_n \cdot SCR \cdot S_n}.$$

**Claims**

1. A method for determining the elements of a photovoltaic solar inverter with an AC grid filter, wherein the inverter (8',8",8''') is connectable to the AC grid (6) at a connection point; the inverter (8',8",8''') comprises:

   • at least one power module (9) for converting a DC input voltage (7) into a three-phase AC output voltage;
   • a three-phase AC/AC transformer (10', 10", 10''') for adapting the three-phase AC output voltage of the power module (9) to the three-phase AC voltage of the AC grid (6), wherein the AC grid (6) has, at the connection point, an inductance "$L_2$"; wherein the three-phase AC/AC transformer (10', 10", 10''') comprises:

      ◦ at least one winding on the low voltage side (10a) connected to the power module (9);
      ◦ at least one winding on the grid side (10b), which is a medium voltage side, connectable in series with the AC grid (6);
      wherein the winding on the low voltage side (10a) connected to the power module (9) together with the winding on the grid side (10b) have an equivalent inductance "$L_1$" and an equivalent impedance "$X_{CC}$";

• a capacitor "C" (11), connected to the winding of the grid side (10b) of the three-phase AC/AC transformer (10', 10", 10''');

wherein the equivalent inductance "$L_1$" (L1, 10a, 10b) of the AC/AC transformer, the capacitor "C" (C, 11) and the inductance "$L_2$" (L2, 6a) of the AC grid form a high frequency "LCL" filter according to the following steps of the method, which comprises:

• defining at least two different values of a Short Circuit Ratio "SCR" at the connection point;
• obtaining corresponding values of the inductance "$L_2$" of the AC grid (6) at the connection point for each value of the Short Circuit Ratio "SCR" by means of the following formula:

$$L_2 = \frac{V_n^2}{2\pi f_n \cdot SCR \cdot S_n}$$

• calculating the equivalent inductance "$L_1$" of the AC/AC transformer by means of the following formula:

$$L_1 = \frac{X_{cc} \cdot V_n^2}{2\pi f_n \cdot S_n}$$

• setting a value for the resonant frequency $f_{res}$ of the $L_1 C L_2$ filter and calculating, for each value of the Short Circuit Ratio "SCR", a corresponding value of the capacitor "C" (11) by means of the following formula:

$$C = \frac{L_1 + L_2}{L_1 \cdot L_2 \cdot (2\pi f_{res})^2}$$

• selecting a value of the capacitor "C" (11) between the minimum and maximum obtained values for the capacitor "C" (11);

wherein:

$X_{CC}$: is the equivalent impedance of the windings of the three-phase AC/AC transformer;
$S_n$: is the nominal power of the transformer;
$V_n$: is the nominal voltage of the transformer on the low side;
$f_n$: is the working frequency;
$f_{res}$: is the resonant frequency of the $L_1 C L_2$ filter.

2. The method of claim 1, wherein the inverter (8',8",8''') further comprises "n" power modules (9) connected to respective windings on the low voltage side (10a) of the three-phase AC/AC transformer (10', 10", 10'''), wherein the method comprises a step of defining a proportion "x" of the transformer impedance on the grid side with respect to the equivalent impedance "Xcc" of the windings of the transformer; and, wherein the step of calculating the equivalent inductance "$L_1$" of the AC/AC transformer is calculated by means of the following formula:

$$L_1 = (x + \frac{(1-x)n}{N}) \frac{X_{cc} \cdot V_n^2}{2\pi f_n \cdot S_n}$$

wherein "N" is a number of windings of a low working side and "n" is the total number of windings of the low voltage side; the number of windings of the low working side "N" being the number of windings connected to the power modules (9) to be operated among the total number of power modules "n".

3. The method of claim 2, wherein the method further comprises powering the "n" power modules (9) with a single DC power bus (12) comprised in the inverter (8',8",8'''), and connecting the single DC bus (12) to at least one DC power source (7).

4. The method of claim 2, wherein the method further comprises powering each of the "n" power modules (9) with respective DC power buses (12) comprised in the inverter (8',8",8'''), and connecting each of the "n" power modules to respective DC power sources (7).

**Patentansprüche**

1. Verfahren zur Bestimmung der Elemente eines Photovoltaik-Solarwechselrichters mit einem WS-Netzfilter, wobei der Wechselrichter (8', 8", 8''') an einem Anschlusspunkt mit dem WS-Netz (6) verbindbar ist; wobei der Wechselrichter (8', 8", 8''') umfasst:

wenigstens ein Leistungsmodul (9) zum Umwandeln einer GS-Eingangsspannung (7) in eine Dreiphasen-WS-Ausgangsspannung;
einen Dreiphasen-WS/WS-Transformator (10', 10", 10''') zum Anpassen der Dreiphasen-WS-Ausgangsspannung des Leistungsmoduls (9) an die Dreiphasen-WS-Spannung des WS-Netzes (6), wobei das WS-Netz (6) am Anschlusspunkt eine Induktivität "$L_2$" aufweist; wobei der Dreiphasen-WS/WS-Transformator (10', 10", 10''') umfasst:

wenigstens eine Wicklung auf der Niederspannungsseite (10a), verbunden mit dem Leistungsmodul (9);
wenigstens eine Wicklung auf der Netzseite (10b), die eine Mittelspannungsseite, in Reihe verbindbar mit dem WS-Netz (6), ist;
wobei die Wicklung auf der Niederspannungsseite (10a), verbunden mit dem Leistungsmodul (9), zusammen mit der Wicklung auf der Netzseite (10b) eine äquivalente Induktivität "$L_1$" und eine äquivalente Impedanz "$X_{cc}$" aufweist;
einen Kondensator "C" (11), verbunden mit der Wicklung der Netzseite (10b) des Dreiphasen-WS/WS-Transformators (10', 10", 10''');
wobei die äquivalente Induktivität "$L_1$" (L1, 10a, 10b) des WS/WS-Transformators, der Kondensator "C" (C, 11) und die Induktivität "$L_2$" (L2, 6a) des WS-Netzes ein Hochfrequenz"LCL"-Filter gemäß den folgenden Schritten des Verfahrens bilden, das umfasst:

Definieren von wenigstens zwei verschiedenen Werten eines Short Circuit Ratio "SCR" am Anschlusspunkt;
Ermitteln von entsprechenden Werten der Induktivität "$L_2$" des WS-Netzes (6) am Anschlusspunkt für jeden Wert des Short Circuit Ratio "SCR" mit Hilfe der folgenden Formel:

$$L_2 = \frac{V_n^2}{2\pi f_n \cdot SCR \cdot S_n}$$

Berechnen der äquivalenten Induktivität "$L_1$" des WS/WS-Transformators mit Hilfe der folgenden Formel:

$$L_1 = \frac{X_{cc} \cdot V_n^2}{2\pi f_n \cdot S_n}$$

Festlegen eines Werts für die Resonanzfrequenz $f_{res}$ des $L_1CL_2$-Filters und Berechnen eines entsprechenden Werts des Kondensators "C" (11) für jeden Wert des Short Circuit Ratio "SCR" mit Hilfe der folgenden Formel:

$$C = \frac{L_1 + L_2}{L_1 \cdot L_2 \cdot (2\pi f_{res})^2}$$

Auswählen eines Werts des Kondensators "C" (11) zwischen dem minimalen und dem maximalen ermittelten Wert für den Kondensator "C" (11); wobei:

$X_{cc}$: die äquivalente Impedanz der Wicklungen des Dreiphasen-WS/WS-Transformators ist;

$S_n$: die Nennleistung des Transformators ist;

$V_n$: die Nennspannung des Transformators auf der Niederspannungsseite ist;

$f_n$: die Betriebsfrequenz ist;

$f_{res}$: die Resonanzfrequenz des $L_1CL_2$-Filters ist.

2. Verfahren nach Anspruch 1, wobei der Wechselrichter (8', 8", 8''') ferner "n" Leistungsmodule (9) umfasst, verbunden mit entsprechenden Wicklungen auf der Niederspannungsseite (10a) des Dreiphasen-WS/WS-Transformators (10', 10", 10'''), wobei das Verfahren einen Schritt zum Definieren eines Anteils "x" der Transformatorimpedanz auf der Netzseite in Bezug auf die äquivalente Impedanz "Xcc" der Wicklungen des Transformators umfasst; und wobei der Schritt zum Berechnen der äquivalenten Induktivität "U" des WS/WS-Transformators mit Hilfe der folgenden Formel berechnet wird:

$$L_1 = (x + \frac{(1-x)n}{N}) \frac{X_{cc} \cdot V_n^2}{2\pi f_n \cdot S_n}$$

wobei "N" eine Zahl von Wicklungen einer Niederspannungs-Betriebsseite ist und "n" die Gesamtzahl von Wicklungen der Niederspannungsseite ist; wobei die Zahl von Wicklungen der Niederspannungsseite "N" die Zahl von mit den zu betreibenden Leistungsmodulen (9) verbundenen Wicklungen von der Gesamtzahl der Leistungsmodule "n" ist.

3. Verfahren nach Anspruch 2, wobei das Verfahren ferner die Versorgung der "n" Leistungsmodule (9) mit einem einzigen GS-Bus (12), enthalten im Wechselrichter (8', 8'''),
und das Verbinden des einzigen GS-Busses (12) mit wenigstens einer GS-Quelle (7) umfasst.

4. Verfahren nach Anspruch 2, wobei das Verfahren ferner das Versorgen jedes der "n" Leistungsmodule (9) mit jeweiligen GS-Bussen (12), enthalten im Wechselrichter (8', 8", 8'''), und das Verbinden jedes der "n" Leistungsmodule mit jeweiligen GS-Quellen (7) umfasst.

## Revendications

1. Procédé pour déterminer les éléments d'un onduleur solaire photovoltaïque avec un filtre de réseau CA, dans lequel l'onduleur (8', 8", 8''') peut être connecté au réseau CA (6) à un point de connexion ; l'onduleur (8', 8", 8''') comprend :

• au moins un module de puissance (9) pour convertir une tension d'entrée CC (7) en une tension CA triphasée de sortie ;
• un transformateur CA/CA triphasé (10', 10", 10''') pour adapter la tension CA triphasée de sortie du module de puissance (9) à la tension CA triphasée du réseau CA (6), dans lequel le réseau CA (6) a, au point de connexion, une inductance "$L_2$" ;
dans lequel le transformateur CA/CA triphasé (10', 10", 10''') comprend :

o au moins un enroulement du côté basse tension (10a) connecté au module de puissance (9) ;
o au moins un enroulement du côté réseau (10b) qui est un côté moyenne tension, connectable en série avec le réseau CA (6) ;
dans lequel l'enroulement du côté basse tension (10a) connecté au module de puissance (9) de même que l'enroulement du côté réseau (10b) ont une inductance équivalente "$L_1$" et une impédance équivalente "$X_{CC}$" ;

• un condensateur "C" (11) connecté à l'enroulement du côté réseau (10b) du transformateur CA/CA triphasé (10', 10", 10''') ;
dans lequel l'inductance équivalente "$L_1$" (L1, 10a, 10b) du transformateur CA/CA, le condensateur "C" (C, 11) et l'inductance "$L_2$" (L2, 6a) du réseau CA forment un filtre haute fréquence "LCL" selon les étapes suivantes du procédé, qui comprend :

• la définition d'au moins deux valeurs différentes d'un rapport de court-circuit "SCR" au point de connexion ;
• l'obtention de valeurs correspondantes de l'inductance "$L_2$" du réseau CA (6) au point de connexion pour chaque valeur du rapport de court-circuit "SCR" au moyen de la formule suivante :

$$L_2 = \frac{V_n^2}{2\pi f_n \cdot SCR \cdot S_n}$$

- le calcul de l'inductance équivalente "$L_1$" du transformateur CA/CA au moyen de la formule suivante :

$$L_1 = \frac{X_{cc} \cdot V_n^2}{2\pi f_n \cdot S_n}$$

- le réglage d'une valeur pour la fréquence de résonance $f_{res}$ du filtre $L_1CL_2$ et le calcul, pour chaque valeur du rapport de court-circuit "SCR", d'une valeur correspondante du condensateur "C" (11) au moyen de la formule suivante :

$$C = \frac{L_1 + L_2}{L_1 \cdot L_2 \cdot (2\pi f_{res})^2}$$

- la sélection d'une valeur du condensateur "C" (11) entre les valeurs minimale et maximale obtenues pour le condensateur "C" (11) ;
où :

$X_{CC}$: est l'impédance équivalente des enroulements du transformateur CA/CA triphasé ;
$S_n$ : est la puissance nominale du transformateur ;
$V_n$ : est la tension nominale du transformateur sur le côté bas ;
$f_n$ : est la fréquence de travail ;
$f_{res}$ : est la fréquence de résonance du filtre $L_1CL_2$.

**2.** Procédé selon la revendication, dans lequel l'onduleur (8', 8", 8‴) comprend en outre "n" modules de puissance (9) connectés à des enroulements respectifs du côté basse tension (10a) du transformateur CA/CA triphasé (10', 10", 10‴), dans lequel le procédé comprend une étape de définition d'une proportion "x" de l'impédance de transformateur du côté réseau par rapport à l'impédance équivalente "$X_{CC}$" des enroulements du transformateur ; et dans lequel l'étape de calcul de l'inductance équivalente "$L_1$" du transformateur CA/CA est calculée au moyen de la formule suivante :

$$L_1 = (x + \frac{(1-x)n}{N})\frac{X_{cc} \cdot V_n^2}{2\pi f_n \cdot S_n}$$

où "N" est un nombre d'enroulements d'un côté travail faible et "n" est le nombre total d'enroulements du côté basse tension ; le nombre "N" d'enroulements du côté travail faible étant le nombre d'enroulements connectés aux modules de puissance (9) à faire fonctionner parmi le nombre total "n" de modules de puissance.

**3.** Procédé selon la revendication 2, dans lequel le procédé comprend en outre l'alimentation des "n" modules de puissance (9) avec un bus de puissance CC (12) unique compris dans l'onduleur (8', 8", 8‴), et la connexion du bus CC (12) unique à au moins une source de puissance CC (7).

**4.** Procédé selon la revendication 2, dans lequel le procédé comprend en outre l'alimentation de chacun des "n" modules de puissance (9) avec des bus de puissance CC (12) respectifs compris dans l'onduleur (8', 8", 8‴), et la connexion de chacun des "n" modules de puissance à des sources de puissance CC (7) respectives.

**FIG. 1**
(STATE OF THE ART)

FIG. 2

FIG. 3

FIG. 4

FIG. 5

FIG. 6

**FIG. 7**

FIG. 8

FIG. 9

**FIG. 10**

FIG. 11

FIG. 12

FIG. 13

**ONE POWER MODULE**

FIG. 14

EP 4 037 171 B1

**FIG. 15**

**FIG. 16**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202159565 U

**Non-patent literature cited in the description**

- **YANJUN**. A 60-kW 3-kW/kg Five-Level T-Type SiC PV Inverter With 99.2 % Peak Efficiency. *2018 IEEE Applied Power Electronics Conference and Exposition (APEC)*, 04 March 2018
- **YANJUN**. Intercell Transformer (ICT) Design Optimization and Interphase Crosstalk Mitigation of a 100-kW SiC Filter-Less Grid-Connected PV String Inverter. *IEEE Open Journal of Power Electronics, 20200208 IEEE*, 08 February 2020

- **HAMMAMI MANEL et al.** *Design and Simulation of a grid-connected photovoltaic system Design and simulation of a grid-connected photovoltaic system*, 21 January 2015, https://www.researchgate.net/profile/Manel-Hammami-2/publication/271194959 Design_ and_Simulation_of_a_grid-connected_photovoltaic_system/links/ 54bfd2d80cf21674ce9c89e6/-Design-and-Simulation-of-a-grid-connected-photovoltaic-system.pdf
- *2017 IEEE APPLIED POWER ELECTRONICS CONFERENCE AND EXPOSITION*, 26 March 2017, 3608-3613